# FASCICULE DE BREVET EUROPEEN

(11) **EP 4 342 859 B1**
(45) Date de publication et mention de la délivrance du brevet: **25.11.2026**
(21) Numéro de dépôt: 23206343.8
(22) Date de dépôt: 12.10.2017
(51) Int. Cl.: C03B 37/04, C03C 13/06, D01D 5/18, D01D 7/02, D04H 1/4226

(54) **FIBRES MINERALES**
MINERALFASERN
MINERAL FIBRES

(30) Priorité: 14.10.2016 FR 1659948
(43) Date de publication de la demande: 27.03.2024
(62) Numéro(s) de document de la (des) demande(s) initiale(s) en application de l'article 76 CBE: 17794005.3 / 3 526 170
(73) Titulaire: SAINT-GOBAIN ISOVER, 92400 Courbevoie (FR)
(72) Inventeur: BROGNIEZ, Sébastien, 92400 COURBEVOIE (FR); GUERY, Guillaume, 92400 COURBEVOIE (FR)
(74) Mandataire: Saint-Gobain Recherche

(56) Documents cités:
- EP-A1- 0 091 381
- FR-A1- 2 779 713
- FR-A1- 2 820 736
- FR-A1- 2 854 626

## Description

Le présent exposé concerne un procédé de formation de fibres minérales par centrifugation interne, un dispositif particulièrement adapté à la mise en œuvre de ce procédé, ainsi que des fibres minérales pouvant être obtenues par ce procédé. Le procédé s'applique notamment à la production industrielle de laine de verre destinée à entrer par exemple dans la composition de produits d'isolation thermique et/ou acoustique. L'invention concerne de la laine minérale et un produit d'isolation thermique tels que définis dans les revendications.

Un filet de verre fondu est introduit dans une assiette de fibrage tournant à grande vitesse et percée à sa périphérie d'un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par un tapis de réception et de convoyage perméable aux gaz. On nomme « centrifugation interne » ce procédé.

Ce procédé a fait l'objet de nombreux perfectionnements, portant notamment pour certains sur l'assiette de fibrage, pour d'autres sur les moyens de générer le courant annulaire d'étirage.

Le document FR 1382917 décrit un organe de fibrage dont le principe est toujours abondamment utilisé : la matière fondue est amenée dans un panier comportant sur sa paroi verticale des orifices à travers lesquels la matière est projetée sous forme de jets sur la paroi interne d'une assiette de fibrage qui est solidaire du panier et qui comporte un grand nombre d'orifices. On nomme « bande » de l'assiette de fibrage cette paroi. Afin d'obtenir un fibrage de qualité, les orifices sont répartis sur des rangées annulaires et les diamètres des orifices sont variables suivant la rangée à laquelle ils appartiennent, ce diamètre allant en diminuant depuis le haut de la bande jusqu'à sa partie inférieure. En fonctionnement, il est également nécessaire de maintenir une réserve constante de matière fondue à l'intérieur de l'assiette de fibrage. FR2820736, EP0091381, FR2854626 et FR2779713 décrivent d'autres dispositifs de fibrage.

La Demanderesse s'est aperçue que des bulles pouvaient se former dans la matière fondue lors de la projection de celle-ci depuis le panier vers l'assiette de fibrage. En fonction des conditions de fibrage, les bulles qui se forment au niveau de l'impact des jets de matière fondue sur la réserve à l'intérieur de l'assiette de fibrage sont susceptibles de persister et de se retrouver dans les fibres. La présente invention vise à proposer un procédé de fibrage permettant d'obtenir une quantité de bulles significative dans les fibres. La présence de bulles dans les fibres peut être avantageuse pour modifier certaines de leurs propriétés, par exemple leur densité.

Ainsi, il est décrit un procédé de formation de fibres minérales par centrifugation interne à l'aide d'un dispositif comprenant un panier et une assiette de fibrage adaptés à tourner solidairement autour d'un axe de rotation, le panier comprenant une paroi annulaire percée d'une pluralité d'orifices et l'assiette de fibrage comprenant une paroi annulaire percée d'une pluralité d'orifices, ledit procédé comprenant :
- l'alimentation du panier en matière à fibrer à une température Tₐ ;
- la centrifugation de la matière à fibrer par rotation solidaire du panier et de l'assiette de fibrage,
caractérisé en ce que le facteur *F* est supérieur à 2 000, le facteur *F* étant défini par $F = \frac{{μ}_{a} d N}{Q}$, dans laquelle :
*µₐ* est la viscosité, exprimée en Pa.s, de la matière à fibrer à la température Tₐ ;
*d* est la distance, exprimée en m, entre la paroi annulaire du panier et la paroi annulaire de l'assiette de fibrage ;
*N* est le nombre d'orifices du panier ; et
*Q* est le débit d'alimentation, exprimé en kg/s, de la matière à fibrer.

Le choix d'un facteur F supérieur à 2 000 permet d'obtenir des fibres minérales présentant une quantité significative de bulles. Plus le facteur F est élevé, plus la quantité de bulles dans les fibres sera élevée. Ainsi, dans le but d'obtenir une quantité de bulles importante, le facteur F est de préférence supérieur à 5 000, supérieur à 7 000 ou 10 000, ou encore supérieur à 15 000, voire supérieur à 20 000, supérieur à 25 000, ou même supérieur à 30 000.

La viscosité *µ* de la matière à fibrer peut être déterminée selon l'équation de Vogel-Fulcher-Tammann : $Log \left(μ\right) = A + \frac{B}{T - C}$ dans laquelle T est la température considérée, et A, B et C sont des constantes spécifiques au matériau considéré, déterminées classiquement par l'homme de l'art par une régression à partie de trois couples de mesures de *µ* et T sur le matériau considéré. La viscosité *µₐ* à la température d'alimentation du panier Tₐ est généralement de 50 à 150 Pa.s, de préférence de 60 à 130 Pa.s.

La distance d entre la paroi annulaire du panier et la paroi annulaire de l'assiette de fibrage est généralement de 0,05 à 0,2 m. Elle est définie par la demi-différence entre le diamètre de l'assiette de fibrage Øa et le diamètre du panier Øp. Le diamètre du panier et de l'assiette de fibrage sont mesurés lorsque le dispositif de fibrage est à l'arrêt. Le diamètre du panier Øp est mesuré en considérant le point le plus externe, par rapport à l'axe de rotation, de sa paroi annulaire tandis que le diamètre de l'assiette de fibrage Øa est mesuré en considérant le point le plus haut sur la partie externe de sa paroi annulaire. L'assiette de fibrage a généralement un diamètre de 200 à 800 mm, par exemple, environ 200, 300, 400 ou 600 mm. En fonction de la taille de l'assiette de fibrage, le panier peut avoir un diamètre de 70 à 400 mm, par exemple environ 70, 200 ou 300 mm. Le rapport entre le diamètre de l'assiette de fibrage et le diamètre du panier Øa/Øp est de préférence supérieur à 2, voire supérieur à 2,2 ou même supérieur à 2,5.

La paroi annulaire du panier comprend généralement 50 à 1 000 orifices, de préférence de 100 à 900 orifices, plus préférentiellement de 150 à 800 orifices. Il est entendu qu'il n'est tenu compte ici que des orifices utiles lors du fonctionnement du dispositif de fibrage, c'est-à-dire des orifices par lesquelles se forme effectivement un jet de matière à fibrer entre le panier et l'assiette de fibrage. Les orifices peuvent être formés sur une ou plusieurs rangées autour de la paroi annulaire sur toute la hauteur de la paroi annulaire, notamment sur 2 à 6 rangées, de façon à distribuer de façon homogène la matière à fibrer contre la paroi annulaire de l'assiette de fibrage. Ils ont généralement un diamètre de 1,5 à 3 mm. La paroi annulaire du panier comprend de préférence une densité linéique d'orifices, c'est-à-dire le rapport entre le nombre d'orifices et le périmètre du panier, supérieure à 2 orifices/cm, de préférence supérieure à 3 orifices/cm, voire supérieure à 5 orifices/cm, ou même supérieure à 7 orifices/cm.

La paroi annulaire de l'assiette de fibrage comprend généralement 10 000 à 60 000 orifices. Le nombre d'orifices de l'assiette sera bien évidemment adapté au diamètre de celle-ci. Ces orifices ont généralement un diamètre de 0,5 à 1,5 mm. Ils sont généralement répartis en plusieurs rangées le long de la paroi annulaire. Les orifices de l'assiette de fibrage peuvent avoir un diamètre constant sur l'ensemble de la paroi annulaire. La paroi annulaire peut également comprendre plusieurs zones annulaires comprenant chacune des orifices de diamètres différents tel que décrit par exemple dans WO 02/064520.

Le débit d'alimentation *Q* de la matière à fibrer dans le panier est généralement de 0,01 à 0,5 kg/s. Le débit par orifice du panier, c'est-à-dire le ratio *Q*/*N*, est de préférence supérieur à 0,1 g/s, voire supérieur à 0,8 g/s et peut aller jusqu'à 2 g/s. Le débit d'alimentation de la matière à fibrer dans le panier peut être déduit à partir de la tirée.

Le panier et l'assiette de fibrage tournent généralement à une vitesse de 1 000 à 4 000 tours/min.

Il est également décrit un dispositif de formation de fibres minérales comprenant un panier et une assiette de fibrage adaptés à tourner solidairement autour d'un axe de rotation, le panier comprenant une paroi annulaire percée d'une pluralité d'orifices et l'assiette de fibrage comprenant une paroi annulaire percée d'une pluralité d'orifices, caractérisé en ce que la paroi annulaire du panier comprend une densité linéique d'orifices supérieure à 5 orifices/cm, de préférence supérieure à 7 orifices/cm.

Les bulles étant générées lors de l'impact des jets provenant du panier sur la réserve de matière fondue dans l'assiette de fibrage, il est en effet avantageux d'augmenter, à débit constant, le nombre de jets formés au niveau du panier. Pour cela, le dispositif comprend un panier ayant une densité linéique d'orifices plus élevée, et donc un nombre d'orifices plus élevé, que les paniers classiquement utilisés afin de favoriser la présence de bulles dans les fibres minérales. Ainsi, la paroi annulaire du panier peut comprendre par exemple 110 à 210 orifices pour un panier de diamètre 70 mm, 310 à 620 orifices pour un panier de diamètre 200 mm, ou encore 470 à 940 orifices pour un panier de diamètre 300 mm.

Les orifices du panier peuvent présenter classiquement un diamètre de 1 à 4 mm. Dans un mode de réalisation particulier, les orifices du panier présentent cependant un diamètre plus petit que ceux des paniers classiquement utilisés afin de contrecarrer l'effet que l'augmentation du nombre d'orifices du panier pourrait avoir sur le débit de matière à fibrer. Pour un panier classique de 70 mm de diamètre comportant 2*50 orifices, les orifices ont généralement un diamètre d'environ 3 mm. Ainsi, dans le dispositif, le diamètre des orifices du panier ont avantageusement un diamètre de 1,2 à 2,9 mm, voire de 1,5 à 2,5 mm. D'autres facteurs tels que la viscosité de la matière à fibrer ou encore la vitesse de centrifugation peuvent cependant également permettre d'adapter le débit de matière à fibrer lors de la mise en œuvre du procédé décrit ci-dessus, sans nécessairement diminuer le diamètre des orifices du panier.

Les autres caractéristiques mentionnées ci-dessus concernant le panier et l'assiette de fibrage restent évidement valables pour le dispositif.

Le dispositif comprend généralement un brûleur annulaire générant un jet d'étirage gazeux à haute température tel que décrit ci-dessus. Il peut également comprendre une couronne de soufflage disposée sous le brûleur. La couronne de soufflage permet d'éviter une dispersion trop importante des fibres par rapport à l'axe de rotation. Le dispositif peut également comprendre une couronne d'induction et/ou un brûleur interne sous l'assiette de fibrage pour chauffer la zone la plus basse de l'assiette de fibrage et éviter ou limiter la création d'un gradient de température sur la hauteur de la paroi annulaire de l'assiette de fibrage.

La figure 1 représente une vue en coupe d'un dispositif de formation de fibres minérales selon l'invention. On définit le « haut », le « bas », le « dessus » et le « dessous » par rapport à un axe vertical lorsque le dispositif est en position de centrifugation, c'est-à-dire lorsque l'axe de rotation du panier et de l'assiette de fibrage est selon un axe vertical, la matière à fibrer étant alimentée par le haut.

Le dispositif de formation de fibres minérales comprend une assiette de fibrage 10, un panier 20 et un arbre 30 d'axe X destiné à être entraîné en rotation par un moteur (non représenté). L'arbre 30 est creux. A son extrémité supérieure, l'arbre 30 est relié à des moyens d'alimentation en matière à fibrer fondue. L'assiette de fibrage 10 et le panier 20 sont fixés solidairement à l'extrémité inférieure de l'arbre 30 via une tulipe 31. L'assiette de fibrage 10 comprend une paroi annulaire 11 percée d'une pluralité d'orifices 12 et un voile 13. Le voile 13 forme le dessus de l'assiette de fibrage 10, entre la paroi annulaire 10 et la tulipe 31. Le diamètre de l'assiette Øa est défini par la distance entre l'axe X et le point haut A sur la partie externe de la paroi annulaire 11, c'est-à-dire au niveau de l'épaule entre le voile 13 et la paroi annulaire 11. Le panier 20 comprend une paroi annulaire 21 percée d'une pluralité d'orifices 22. Le diamètre du panier Øp est défini par la distance entre l'axe X et le point le plus externe de la paroi annulaire 21. Le panier 20 est situé à l'intérieur de l'assiette de fibrage 10. Lorsque le dispositif de formation de fibres minérales est en position de fibrage, l'axe X est vertical.

Lorsque le dispositif est en fonctionnement, l'arbre 30, l'assiette de fibrage 10 et le panier 20 sont entraînés solidairement en rotation autour de l'axe X. La matière à fibrer fondue 100 s'écoule dans l'arbre 30 depuis les moyens d'alimentation, jusqu'au panier 20, dans lequel elle se répand. Sous l'effet de la rotation, la matière à fibrer fondue est projetée sur la paroi annulaire 21 du panier 20, passe par la pluralité d'orifices 22 du panier 20 et est projetée sur la paroi annulaire 11 de l'assiette de fibrage 10 sous forme de filaments 101. Une réserve permanente de matière à fibrer en fusion 102 se forme alors dans l'assiette de fibrage 10 pour venir alimenter la pluralité d'orifices 12 percés dans la paroi annulaire 11 de l'assiette de fibrage 10. La matière à fibrer fondue passe par la pluralité d'orifices 12 de l'assiette de fibrage 10 pour former des cônes d'écoulement 103 qui se prolongent en avant-fibres 104, puis en fibres 105.

Les conditions du procédé décrit ci-dessus, favorisent la formation de bulles dans la matière à fibrer au niveau de l'impact des filaments 101 avec la réserve 102 présente dans l'assiette de fibrage 10. Les bulles sont générées en quantité et taille suffisantes permettant leur persistance dans les fibres minérales obtenues.

Le dispositif de centrifugation interne comprend généralement un brûleur annulaire 40 générant un jet d'étirage gazeux à haute température. Le brûleur annulaire a pour axe de symétrie l'axe de rotation X de l'arbre 30. La sortie du brûleur annulaire est située au-dessus de la paroi annulaire 11 de l'assiette de fibrage 10, le jet d'étirage gazeux étant tangentiel à la paroi annulaire 11 de l'assiette de fibrage 10. Le jet d'étirage gazeux permet de chauffer à la fois la paroi annulaire 11 de l'assiette de fibrage 10 et les cônes d'écoulement 103 qui se forment à la sortie de l'assiette de fibrage 10. Sous l'action du jet d'étirage gazeux du brûleur annulaire 40, les avant-fibres 104 s'étirent, leur portion terminale générant des fibres 105 discontinues ensuite collectées sous l'assiette de fibrage 10.

Le dispositif de formation de fibres minérales peut comprendre également une couronne de soufflage 50 disposée sous le brûleur 40. La couronne de soufflage 50 a pour effet de rabattre les fibres 105 vers l'axe X et d'éviter ainsi une dispersion des fibres 105 trop loin de l'axe X.

La composition de la matière à fibrer n'est pas particulièrement limitée du moment qu'elle peut être fibrée par un procédé de centrifugation interne. Elle peut varier en fonction des propriétés souhaitées pour les fibres minérales produites, par exemple les propriétés de biosolubilité, de résistance au feu ou d'isolation thermique. La matière à fibrer est de préférence une composition de verre de type boro-silico-sodo-calcique. Elle peut présenter notamment une composition qui renferme les constituants ci-après, dans les proportions pondérales définies par les limites suivantes :

| | |
|---|---|
| SiO₂ | 35 à 80%, |
| Al₂O₃ | 0 à 30%, |
| CaO+MgO | 2 à 35%, |
| Na₂O+K₂O | 0 à 20%, |

étant entendu qu'en général,
SiO₂+Al₂O₃ est compris dans le domaine allant de 50 à 80% en poids et que
Na₂O+K₂O+B₂O₃ est compris dans le domaine allant de 5 à 30% en poids.

La matière à fibrer peut notamment présenter une la composition suivante:

| | |
|---|---|
| SiO₂ | 50 à 75%, |
| Al₂O₃ | 0 à 8%, |
| CaO+MgO | 2 à 20%, |
| Fe₂O₃ | 0 à 3%, |
| Na₂O+K₂O | 12 à 20%, |
| B₂O₃ | 2 à 10% ; |

ou encore la composition suivante :

| | |
|---|---|
| SiO₂ | 35 à 60%, |
| Al₂O₃ | 10 à 30%, |
| CaO+MgO | 10 à 35%, |
| Fe₂O₃ | 2 à 10%, |
| Na₂O+K₂O | 0 à 20%. |

La matière à fibrer peut être élaborée à partir de constituants purs, mais est généralement obtenue par fusion d'un mélange de matières premières naturelles apportant différentes impuretés.

La matière à fibrer présente de préférence les propriétés suivantes :
- une température correspondant à une viscosité de 100 Pa.s (T log 3) inférieure à 1200 °C, voire inférieure à 1150° C, de préférence entre 1020 et 1100 °C, voire entre 1050 et 1080 °C ; et
- une température de liquidus (T liquidus) telle que l'écart entre T log 3 et T liquidus soit supérieur à 50 °C, notamment une température de liquidus de 870 °C, voire 900 °C, à 950 °C.

La température d'alimentation Tₐ de la matière à fibrer à l'entrée de l'arbre 30 peut varier de 1000 à 1550°C. Elle peut dépendre de nombreux paramètres, notamment de la nature de la matière à fibrer et des caractéristiques du dispositif de fibrage. La température Tₐ est généralement de l'ordre de 1000 à 1200°C, de préférence 1020 à 1100°C.

Le procédé de formation de fibres minérales selon l'invention et le dispositif de formation de fibres minérales selon l'invention permettent d'obtenir des fibres minérales présentant une quantité de bulles significatives. Les bulles présentes dans les fibres minérales peuvent être quantifiées par une mesure de diffusion de la lumière. Ainsi, la présente invention concerne des fibres minérales sous forme de la laine minérale, présentant une diffusion lumineuse DL supérieure à 0,4, de préférence supérieure à 0,5, plus préférentiellement supérieure à 0,6. La diffusion lumineuse DL des fibres minérales est déterminée par mesure de l'intensité lumineuse diffusée par les fibres minérales placées dans une cuve de spectrophotomètre remplie d'un liquide d'indice. Le protocole de mesure est le suivant :
- Principe

Une cuve de 10 mm*10 mm*40 mm est éclairée par un premier côté latéral à l'aide d'un spot LED et une photo est prise sur un fond noir sur un côté latéral de la cuve perpendiculaire au premier côté, pendant un temps d'exposition déterminé. Le temps d'exposition, identique pour tous les échantillons, est choisi de sorte que le détecteur ne soit jamais saturé.

La médiane des intensités lumineuses des pixels sur une zone de 7 mm*28 mm définie à 1,5 mm des bords de la cuve et 3 mm du fond de la cuve est ensuite mesurée par analyse d'image

### - Calibration

Afin de calibrer les mesures, deux points de référence sont mesurés pour une cuve contenant uniquement un liquide d'indice (phtalate de diméthyle) et pour une cuve contenant du lait dilué 100 fois dans l'eau.

### - Mesure

Un échantillon de 400 mg de fibres minérales vierges de liant est introduit dans une cuve remplie du liquide d'indice. Une fois mesurée la médiane de l'intensité lumineuse, la diffusion lumineuse pour cet échantillon est calculée selon la formule suivante : $DL \left(échantillon\right) = \frac{I \left(échantillon\right) - I \left(liquide d′indice\right)}{I \left(échantillon\right) - I \left(lait\right)}$ dans laquelle I(échantillon), l(liquide d'indice) et l(lait) sont les médianes des intensités respectivement de l'échantillon, du liquide d'indice et du lait dilué 100 fois.

La diffusion lumineuse DL de fibres minérales données correspond à la moyenne des diffusions lumineuses mesurées pour au moins 6 échantillons de celles-ci.

Les fibres minérales selon l'invention ont de préférence une composition telle définie ci-dessus pour la matière à fibrer.

Enfin, l'invention concerne également des produits d'isolation thermique et/ou acoustique comprenant des fibres minérales selon l'invention.

L'invention est illustrée à l'aide d'exemples non limitatifs suivants.

### EXEMPLES

L'exemple de référence (Ref.), les exemples comparatifs (C1 et C2) et les exemples 1 et 2 selon l'invention ont été réalisés avec une matière à fibrer ayant la composition suivante, en pourcentage pondéral :

| | |
|---|---|
| SiO₂ | 65,3 % |
| Al₂O₃ | 2,1 % |
| CaO | 8,1 % |
| MgO | 2,4 % |
| Na₂O | 16,4% |
| K₂O | 0,7 % |
| B₂O₃ | 4,5 % |

Les caractéristiques du dispositif de fibrage utilisé ainsi que les conditions de fibrage sont détaillées dans le tableau 1 ci-dessous.

Pour l'exemple de référence, le dispositif de fibrage utilisé est un dispositif sans panier comprenant une assiette de fibrage à fond. Les fibres obtenues ne comprennent donc pas de bulles. Pour les exemples C1, 1 et 2, le dispositif de fibrage utilisé est identique à la différence du panier qui présente un nombre de trous plus important pour les exemples 1 et 2 par rapport à l'exemple comparatif C1 qui utilise un panier classique.

**Tableau 1**

| | | **Ref.** | **C1** | **Ex. 1** | **Ex. 2** |
|---|---|---|---|---|---|
| Débit (kg/s) | | 0,23 | 0,23 | 0,23 | 0,23 |
| Tₐ (°C) | | *1036* | *1036* | *1036* | *1036* |
| *µₐ* (Pa.s) | | 147 | 147 | 147 | 147 |
| Panier : | | - | | | |
| | Diamètre (mm) | | 200 | 200 | 200 |
| | Nombre d'orifices | | 30 | 240 | 600 |
| | Diamètre des orifices (mm) | | 5,0 | 2,9 | 2,3 |
| Assiette de fibrage : | | | | | |
| | Diamètre (mm) | 400 | 400 | 400 | 400 |
| | Nombre d'orifices | 30270 | 30270 | 30270 | 30270 |
| | Diamètre des orifices (mm) | ***0,7*** | ***0,7*** | ***0,7*** | ***0,7*** |
| Brûleur annulaire : | | | | | |
| | Température (°C) | 1300 | 1300 | 1300 | 1300 |
| Couronne d'induction : | | | | | |
| | Puissance (kW) | *20* | *20* | *20* | *20* |
| F | | - | *1900* | *15250* | *38120* |

Les diffusions lumineuses des fibres ainsi obtenues ont été mesurées comme décrit plus haut et sont présentées dans le tableau 2 ci-dessous :

**Tableau 2**

| Fibre | Ref. | C1 | Ex. 1 | Ex. 2 |
|---|---|---|---|---|
| DL | 0,13 | 0,30 | 0,53 | 0,71 |

Les fibres des exemples 1 et 2 présentent une diffusion lumineuse bien supérieure à celle des fibres de référence et des fibres de l'exemple comparatif C1, ce qui traduit la présence d'une quantité de bulles significative dans les fibres des exemples 1 et 2.

## Revendications

1. Laine minérale, **caractérisée en ce qu'**elle présente une diffusion lumineuse DL supérieure à 0,4, de préférence supérieure à 0,5, plus préférentiellement supérieure à 0,6.

2. Laine minérale selon la revendication 1, **caractérisé en ce qu'**elle présente une composition qui renferme les constituants ci-après, dans les proportions pondérales définies par les limites suivantes :
| | |
|---|---|
| SiO₂ | 35 à 80%, |
| Al₂O₃ | 0 à 30%, |
| CaO+MgO | 2 à 35%, |
| Na₂O+K₂O | 0 à 20%. |

3. Laine minérale selon la revendication 2, **caractérisée en ce que** la somme des proportions pondérales des constituants SiO₂+Al₂O₃ est comprise dans le domaine allant de 50 à 80% en poids et la somme des proportions pondérales des constituants Na₂O+K₂O+B₂O₃ est comprise dans le domaine allant de 5 à 30% en poids.

4. Laine minérale selon l'une des revendications 1 à 3, **caractérisée en ce qu'**elle présente une composition qui renferme les constituants ci-après, dans les proportions pondérales définies par les limites suivantes :
| | |
|---|---|
| SiO₂ | 50 à 75%, |
| Al₂O₃ | 0 à 8%, |
| CaO+MgO | 2 à 20%, |
| Fe₂O₃ | 0 à 3%, |
| Na₂O+K₂O | 12 à 20%, |
| B₂O₃ | 2 à 10%. |

5. Laine minérale selon l'une des revendications 1 à 3, **caractérisée en ce qu'**elle présente une composition qui renferme les constituants ci-après, dans les proportions pondérales définies par les limites suivantes :
| | |
|---|---|
| SiO₂ | 35 à 60%, |
| Al₂O₃ | 10 à 30%, |
| CaO+MgO | 10 à 35%, |
| Fe₂O₃ | 2 à 10%, |
| Na₂O+K₂O | 0 à 20%. |

6. Laine minérale selon l'une des revendications 1 à 5, **caractérisée en ce qu'**elle est obtenue par un procédé de centrifugation interne à l'aide d'un dispositif comprenant un panier et une assiette de fibrage adaptés à tourner solidairement autour d'un axe de rotation, le panier comprenant une paroi annulaire percée d'une pluralité d'orifices et l'assiette de fibrage comprenant une paroi annulaire percée d'une pluralité d'orifices.

7. Laine minérale selon la revendication 6, **caractérisée en ce que** la paroi annulaire du panier comprend une densité linéique d'orifices supérieure à 5 orifices/cm.

8. Laine minérale selon la revendication 7, **caractérisé en ce que** les orifices du panier ont un diamètre de 1,2 à 2,9 mm, de préférence de 1,5 à 2,5 mm.

9. Laine minérale selon l'une des revendications 6 à 8, **caractérisée en ce que** le procédé de centrifugation interne comprend :
- l'alimentation du panier en matière à fibrer à une température Tₐ ;
- la centrifugation de la matière à fibrer par rotation solidaire du panier et de l'assiette de fibrage,
le facteur F étant supérieur à 2 000, de préférence supérieur à 5 000, plus préférentiellement supérieur à 10 000, le facteur F étant défini par $F = \frac{{μ}_{a} d N}{Q}$, dans laquelle :
*µₐ* est la viscosité, exprimée en Pa.s, de la matière à fibrer à la température Tₐ ;
d est la distance, exprimée en m, entre la paroi annulaire du panier et la paroi annulaire de l'assiette de fibrage ;
N est le nombre d'orifices du panier ; et
Q est le débit d'alimentation, exprimé en kg/s, de la matière à fibrer.

10. Laine minérale selon la revendication 9, **caractérisée en ce que** la viscosité de la matière à fibrer à la température Tₐ est de 50 à 150 Pa.s.

11. Laine minérale selon l'une des revendications 9 ou 10, **caractérisée en ce que** le débit d'alimentation de la matière à fibrer est de 0,01 à 0,5 kg/s.

12. Laine minérale selon l'une des revendications 9 à 11, **caractérisée en ce que** la matière à fibrer est alimentée dans le panier à une température de 1000 à 1550°C et/ou le panier et l'assiette de fibrage tournent généralement à une vitesse de 1 000 à 4 000 tours/min.

13. Laine minérale selon l'une des revendications 9 à 12, **caractérisé en ce que** le facteur F est supérieur à 20 000,de préférence supérieur à 25 000, encore de préférence supérieur à 30 000.

14. Laine minérale selon l'une des revendications 6 à 13, **caractérisée en ce que** la distance entre la paroi annulaire du panier et la paroi annulaire de l'assiette de fibrage est de 0,05 à 0,2 m.

15. Laine minérale selon l'une des revendications 6 à 14, **caractérisée en ce que** la paroi annulaire du panier comprend 50 à 1 000 orifices, et/ou la paroi annulaire du panier comprend une densité linéique d'orifices supérieure à 5 orifices/cm, de préférence supérieure à 7 orifices/cm.

16. Produit d'isolation thermique et/ou acoustique comprenant la laine minérale telles que définie à l'une des revendications 1 à 15.

## Patentansprüche

1. Mineralwolle, **dadurch gekennzeichnet, dass** sie eine Lichtstreuung (LD) von mehr als 0,4, vorzugsweise von mehr als 0,5, insbesondere von mehr als 0,6 aufweist.

2. Mineralwolle nach Anspruch 1, **dadurch gekennzeichnet, dass** sie eine Zusammensetzung mit folgenden Bestandteilen in den nachstehenden Gewichtsanteilen aufweist:
• SiO₂: 35 bis 80 Gew.-%
• Al₂O₃: 0 bis 30 Gew.-%
• CaO+MgO: 2 bis 35 Gew.-%
• Na₂O+K₂O: 0 bis 20 Gew.-%

3. Mineralwolle nach Anspruch 2, **dadurch gekennzeichnet, dass** die Summe der Gewichtsanteile der Bestandteile SiO₂+Al₂O₃ 50 bis 80 Gew.-% beträgt und die Summe der Gewichtsanteile der Bestandteile Na₂O+K₂O+B₂O₃ 5 bis 30 Gew.-% beträgt.

4. Mineralwolle nach einem der Ansprüche 1 bis 3, **dadurch gekennzeichnet, dass** sie eine Zusammensetzung mit folgenden Bestandteilen in den nachstehenden Gewichtsanteilen aufweist:
• SiO₂: 50 bis 75 Gew.-%
• Al₂O₃: 0 bis 8 Gew.-%
• CaO+MgO: 2 bis 20 Gew.-%
• Fe₂O₃: 0 bis 3 Gew.-%
• Na₂O+K₂O: 12 bis 20 Gew.-%
• B₂O₃: 2 bis 10 Gew.-%

5. Mineralwolle nach einem der Ansprüche 1 bis 3, **dadurch gekennzeichnet, dass** sie eine Zusammensetzung mit folgenden Bestandteilen in den nachstehenden Gewichtsanteilen aufweist:
• SiO₂: 35 bis 60 Gew.-%
• Al₂O₃: 10 bis 30 Gew.-%
• CaO+MgO: 10 bis 35 Gew.-%
• Fe₂O₃: 2 bis 10 Gew.-%
• Na₂O+K₂O: 0 bis 20 Gew.-%

6. Mineralwolle nach einem der Ansprüche 1 bis 5, **dadurch gekennzeichnet, dass** sie durch ein Innenzentrifugierverfahren unter Verwendung einer Vorrichtung hergestellt wird, die einen Korb und einen Faserbildungsteller umfasst, welche dazu ausgebildet sind, gemeinsam um eine Rotationsachse zu rotieren, wobei der Korb eine ringförmige Wand mit einer Vielzahl von Öffnungen umfasst und der Faserbildungsteller ebenfalls eine ringförmige Wand mit einer Vielzahl von Öffnungen umfasst.

7. Mineralwolle nach Anspruch 6, **dadurch gekennzeichnet, dass** die ringförmige Wand des Korbes eine lineare Öffnungsdichte von mehr als 5 Öffnungen/cm aufweist.

8. Mineralwolle nach Anspruch 7, **dadurch gekennzeichnet, dass** die Öffnungen des Korbes einen Durchmesser von 1,2 bis 2,9 mm, vorzugsweise von 1,5 bis 2,5 mm aufweisen.

9. Mineralwolle nach einem der Ansprüche 6 bis 8, **dadurch gekennzeichnet, dass** das Innenzentrifugierverfahren folgende Schritte umfasst:
• Zuführen eines zu verfasernden Materials mit einer Temperatur Ta in den Korb;
• Zentrifugieren des zu verfasernden Materials durch gemeinsame Rotation des Korbes und des Faserbildungstellers,
wobei der Faktor F größer als 2 000, vorzugsweise größer als 5 000, insbesondere größer als 10 000 ist, wobei der Faktor F wie folgt definiert ist: $F = \left(μa\times d\times N\right) / Q$
wobei:
• µa die Viskosität des zu verfasernden Materials bei der Temperatur Ta in Pa·s ist,
• d der Abstand zwischen der ringförmigen Wand des Korbes und der ringförmigen Wand des Faserbildungstellers in m ist,
• N die Anzahl der Öffnungen des Korbes ist, und
• Q die Zufuhrrate des zu verfasernden Materials in kg/s ist.

10. Mineralwolle nach Anspruch 9, **dadurch gekennzeichnet, dass** die Viskosität des zu verfasernden Materials bei der Temperatur Ta zwischen 50 und 150 Pa·s liegt.

11. Mineralwolle nach Anspruch 9 oder 10, **dadurch gekennzeichnet, dass** die Zufuhrrate des zu verfasernden Materials zwischen 0,01 und 0,5 kg/s liegt.

12. Mineralwolle nach einem der Ansprüche 9 bis 11, **dadurch gekennzeichnet, dass** das zu verfasernde Material dem Korb bei einer Temperatur von 1000 bis 1550 °C zugeführt wird und/oder dass der Korb und der Faserbildungsteller üblicherweise mit einer Drehzahl von 1000 bis 4 000 U/min rotieren.

13. Mineralwolle nach einem der Ansprüche 9 bis 12, **dadurch gekennzeichnet, dass** der Faktor F größer als 20 000, vorzugsweise größer als 25 000, insbesondere größer als 30 000 ist.

14. Mineralwolle nach einem der Ansprüche 6 bis 13, **dadurch gekennzeichnet, dass** der Abstand zwischen der ringförmigen Wand des Korbes und der ringförmigen Wand des Faserbildungstellers 0,05 bis 0,2 m beträgt.

15. Mineralwolle nach einem der Ansprüche 6 bis 14, **dadurch gekennzeichnet, dass** die ringförmige Wand des Korbes 50 bis 1000 Öffnungen aufweist und/oder dass die ringförmige Wand des Korbes eine lineare Öffnungsdichte von mehr als 5 Öffnungen/cm, vorzugsweise von mehr als 7 Öffnungen/cm aufweist.

16. Wärme- und/oder Schalldämmprodukt, umfassend eine Mineralwolle nach einem der Ansprüche 1 bis 15.

## Claims

1. Mineral wool, **characterized in that** it has a light diffusion (LD) greater than 0.4, preferably greater than 0.5, more preferably greater than 0.6.

2. Mineral wool according to claim 1, **characterized in that** it has a composition comprising the following constituents in the following proportions by weight:
• SiO₂: 35 to 80%
• Al₂O₃: 0 to 30%
• CaO+MgO: 2 to 35%
• Na₂O+K₂O: 0 to 20%.

3. Mineral wool according to claim 2, **characterized in that** the sum of the proportions by weight of the constituents SiO₂+Al₂O₃ is from 50 to 80 wt.%, and the sum of the proportions by weight of the constituents Na₂O+K₂O+B₂O₃ is from 5 to 30 wt.%.

4. Mineral wool according to any one of claims 1 to 3, **characterized in that** it has a composition comprising the following constituents in the following proportions by weight:
• SiO₂: 50 to 75%
• Al₂O₃: 0 to 8%
• CaO+MgO: 2 to 20%
• Fe₂O₃: 0 to 3%
• Na₂O+K₂O: 12 to 20%
• B₂O₃: 2 to 10%.

5. Mineral wool according to any one of claims 1 to 3, **characterized in that** it has a composition comprising the following constituents in the following proportions by weight:
• SiO₂: 35 to 60%
• Al₂O₃: 10 to 30%
• CaO+MgO: 10 to 35%
• Fe₂O₃: 2 to 10%
• Na₂O+K₂O: 0 to 20%.

6. Mineral wool according to any one of claims 1 to 5, **characterized in that** it is obtained by an internal centrifugation process using a device comprising a basket and a fiberizing spinner adapted to rotate together about a rotation axis, the basket comprising an annular wall pierced with a plurality of apertures and the fiberizing spinner comprising an annular wall pierced with a plurality of apertures.

7. Mineral wool according to claim 6, **characterized in that** the annular wall of the basket comprises a linear density of apertures greater than 5 apertures/cm.

8. Mineral wool according to claim 7, **characterized in that** the apertures of the basket have a diameter of from 1.2 to 2.9 mm, preferably from 1.5 to 2.5 mm.

9. Mineral wool according to any one of claims 6 to 8, **characterized in that** the internal centrifugation process comprises:
• feeding the basket with material to be fiberized at a temperature Ta;
• centrifuging the material to be fiberized by joint rotation of the basket and the fiberizing spinner,
wherein the factor F is greater than 2,000, preferably greater than 5,000, more preferably greater than 10,000, the factor F being defined by: $F = \left(μa\times d\times N\right) / Q$
wherein:
• µa is the viscosity, expressed in Pa.s, of the material to be fiberized at temperature Ta;
• d is the distance, expressed in m, between the annular wall of the basket and the annular wall of the fiberizing spinner;
• N is the number of apertures of the basket; and
• Q is the feed rate, expressed in kg/s, of the material to be fiberized.

10. Mineral wool according to claim 9, **characterized in that** the viscosity of the material to be fiberized at temperature Ta is from 50 to 150 Pa.s.

11. Mineral wool according to claim 9 or 10, **characterized in that** the feed rate of the material to be fiberized is from 0.01 to 0.5 kg/s.

12. Mineral wool according to any one of claims 9 to 11, **characterized in that** the material to be fiberized is fed into the basket at a temperature of from 1000 to 1550°C and/or the basket and the fiberizing spinner generally rotate at a speed of from 1,000 to 4,000 rpm.

13. Mineral wool according to any one of claims 9 to 12, **characterized in that** the factor F is greater than 20,000, preferably greater than 25,000, more preferably greater than 30,000.

14. Mineral wool according to any one of claims 6 to 13, **characterized in that** the distance between the annular wall of the basket and the annular wall of the fiberizing spinner is from 0.05 to 0.2 m.

15. Mineral wool according to any one of claims 6 to 14, **characterized in that** the annular wall of the basket comprises from 50 to 1,000 apertures, and/or the annular wall of the basket comprises a linear density of apertures greater than 5 apertures/cm, preferably greater than 7 apertures/cm.

16. Thermal and/or acoustic insulation product comprising the mineral wool as defined in any one of claims 1 to 15.
